# EUROPÄISCHE PATENTANMELDUNG

(11) **EP 0 872 993 A2**
(43) Veröffentlichungstag der Anmeldung: **21.10.1998**
(21) Anmeldenummer: 98105258.2
(22) Anmeldetag: 24.03.1998
(51) Int. Cl.: H04M 1/00, H04M 1/72

(54) **Bedienerführung in Kommunikations-Endgeräten**

(30) Priorität: 18.04.1997 DE 19717719
(71) Anmelder: DeTeWe - Deutsche Telephonwerke Aktiengesellschaft & Co., 10997 Berlin (DE)
(72) Erfinder: Fischer, André, 10965 Berlin (DE)

(57) **Zusammenfassung**

Die Erfindung bezieht sich auf eine Anordnung zur Bedienerführung in Kommunikations-Endgeräten von Telekommunikationsanlagen, die mit Displays für alpha-numerische und/oder grafikfähige Anzeigen ausgestattet sind, wobei als Steuermittel ein Rollelement mit Tastenfunktion (1) mit einer separaten Aktivierungstaste (2) verwendet wird und wahlweise dem Display zeilenweise Aktivierungselemente (4) zugeordnet sind.

## Beschreibung

Die Erfindung betrifft eine Anordnung zur Bedienerführung in Kommunikations-Endgeräten von Telekommunikationsanlagen, die mit Displays für alpha-numerische und/oder grafikfähige Anzeigen ausgestattet sind.

Bedienerführungen, z. B. bei Kommunikations-Endgeräten sind bekannt. Hierzu werden einer Hilfstaste zur Eingabetastatur feste oder variable Leistungsmerkmale zugeordnet, die einzeln oder gruppenweise auf einer Anzeigevorrichtung wiedergegeben werden können (DE 42 02 040 A1). Um die angezeigten Leistungsmerkmale aufzurufen, ist jedem Leistungsmerkmal eine zusätzliche Funktionstaste zugeordnet.

Andere Lösungen bedienen sich einer in verschiedene Richtungen beweglichen Taste zum Ansteuern bestimmter Funktionen und Darstellungen auf einem Display (EP 0 685 953 A1).

Weiterhin ist bekannt, Rollvorrichtungen zu verwenden, die abhängig von der Richtung und der Rotationsgeschwindigkeit Steuersignale für eine Displayanzeige liefern (EP 0 463 856 B1).

Diese bekannten Mitteln zur Bedienerführung erfordern jeweils gleichartige weitere Elemente, um in einer Displaydarstellung zusätzliche Informationen einblenden zu können.

Aufgabe der vorliegenden Erfindung war es, eine Möglichkeit mit wenigen Betätigungsmitteln anzugeben, die das zusätzliche Einblenden von Informationen sowie ein Blättern in ihnen und deren Aktivierung gestattet.

Diese Aufgabe ist durch die Erfindung gelöst, wie sie im Kennzeichnungsteil des ersten Patentanspruches dargelegt ist. Weitere vorteilhafte Maßnahmen sind Gegenstand der Unteransprüche.

Die Erfindung wird nachfolgend anhand einer Zeichnung näher beschrieben.

Die Bedienerführung besteht im wesentlichen aus einem Rollelement mit Tastenfunktion (1) und einer Aktivierungstaste (2). Dem Display sind zeilenweise Aktivierungselemente (4), sogenannte Softkeys, zugeordnet. Die funktionale Belegung der Aktivierungselemente (4) mit Zielen, Funktionen oder Leitungen ist durch die zugeordnete Beschriftung im Display gegeben, die ggf. mittels des Rollelementes (1) nach oben oder nach unten veränderlich ist.

In einer weiteren Variante sind auch virtuelle Aktivierungselemente vorgesehen. Diese sind mittels des Rollelementes (1) auswählbar und durch kurzen Druck auf das Rollelement (1) wird die zugeordnete Funktion in der Telekommunikationsanlage initiiert.

Das Display ist in zwei Informationsabschnitte (3a, 3b) unterteilt. Der erste Abschnitt (3a) dient einer Darstellung für aktuelle Informationen, der zweite Abschnitt (3b) der Beschriftung der zugeordneten Aktivierungselemente (4). Dabei sind in der bildlichen Darstellung die Informationen (3a) invers zu den Beschriftungen (3b) gehalten.

Durch die Aktivierungstaste (2) werden zusätzliche Listen (3c), z. B. in Karteikartenform, in das Display eingeblendet.

Diese Listen (3c) beinhalten zustandsabhängig die Überschrift in Kartenreiter und als Listeneintrag Ziele, Funktionen und Erläuterungen in Textform. Mit dem Rollelement mit Tastenfunktion (1) werden die Inhalte ausgewählt und durch kurzen Druck auf das Rollelement (1) wird die zugeordnete Funktion in der Telekommunikationsanlage initiiert.

Durch einen längeren Druck auf das Rollelement (1) ist eine weitere Funktion abrufbar.

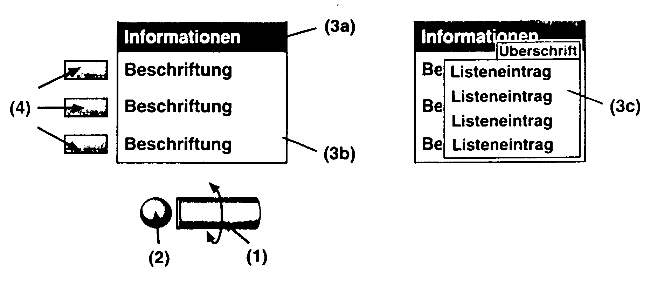

## Patentansprüche

1. Anordnung zur Bedienerführung in Kommunikations-Endgeräten von Telekommunikationsanlagen, die mit Displays für alpha-numerische und/oder grafikfähige Anzeigen ausgestattet sind, dadurch gekennzeichnet, daß als Steuermittel ein Rollelement mit Tastenfunktion (1) mit einer separaten Aktivierungstaste (2) verwendet wird und wahlweise dem Display zeilenweise Aktivierungselemente (4) zugeordnet sind.

2. Anordnung nach Anspruch 1, dadurch gekennzeichnet, daß das Display in zwei Informationsabschnitte (3a, 3b) unterteilt ist, wobei dem zweiten Abschnitt (3b) die Aktivierungselemente (4) zugeordnet sind.

3. Anordnung nach Anspruch 1 und 2, dadurch gekennzeichnet, daß mittels der Aktivierungstaste (2) zusätzliche Listen (3c) einblendbar sind.

4. Anordnung nach Anspruch 1 bis 3, dadurch gekennzeichnet, daß die Inhalte der zusätzlichen Listen (3c) durch Druck auf das Rollelement mit Tastenfunktion (1) initiiert werden.

5. Anordnung nach Anspruch 2, dadurch gekennzeichnet, daß die Informationsabschnitte (3a, 3b) in ihren bildlichen Darstellungen invers zueinander sind.
